# EUROPÄISCHE PATENTSCHRIFT

(11) **EP 2 412 575 B1**
(45) Veröffentlichungstag und Bekanntmachung des Hinweises auf die Patenterteilung: **30.11.2016**
(21) Anmeldenummer: 11176119.3
(22) Anmeldetag: 01.08.2011
(51) Int. Cl.: B60Q 1/26, H05B 33/08, F21S 10/06

(54) **Warnbalken für Einsatzfahrzeuge sowie Einsatzfahrzeug mit einem solchen Warnbalken**
Light bar for emergency vehicles and emergency vehicle with such light bar
Barre de gyrophare pour véhicules opérationnels ainsi que véhicule opérationnel équipé de cette barre.

(30) Priorität: 30.07.2010 DE 102010036784; 23.08.2010 DE 102010037124
(43) Veröffentlichungstag der Anmeldung: 01.02.2012
(73) Patentinhaber: Standby Pintsch GmbH, 46537 Dinslaken (DE)
(72) Erfinder: Boscher, Guido, 47906 Kempen (DE)
(74) Vertreter: CBDL Patentanwälte

(56) Entgegenhaltungen:
- WO-A1-2005/121637
- WO-A2-02/41276
- DE-A1- 19 916 238
- DE-B3-102006 061 808
- US-A- 6 140 918
- US-A1- 2006 250 269
- US-A1- 2007 081 331

## Beschreibung

### TECHNISCHES GEBIET DER ERFINDUNG

Die Erfindung betrifft einen Warnbalken für Einsatzfahrzeuge, wobei der Warnbalken wenigstens eine LED-Signaleinrichtung zur Erzeugung eines drehenden oder blitzenden Warnsignals aus sichtbarem Licht umfasst. Die Erfindung betrifft auch ein Einsatzfahrzeug mit einem solchen Warnbalken.

### HINTERGRUND DER ERFINDUNG

Unter dem Begriff "Warnbalken" werden hier Einheiten verstanden, die optische und ggf. auch akustische Signaleinrichtungen, insbesondere Blaulichter, umfassen und zur Befestigung auf Einsatzfahrzeugen, insbesondere Fahrzeugen von Polizei und Feuerwehr, aber auch Baustellen- und Abschleppfahrzeugen u.dgl. vorgesehen sind.

Um die hinlänglich bekannten Vorteile der LED-Technik auch bei Warnbalken nutzbar zu machen und lichtstarke Signalleuchten von hoher Zuverlässigkeit und Lebensdauer bei gleichzeitig geringem Stromverbrauch zu realisieren, wurden verschiedene Lösungen vorgeschlagen, z.B. in der DE 199 22 176 A1. Dabei sind die LEDs im Regelfall auf einer im wesentlichen zylindrischen Mantelfläche so angeordnet, dass sie derart zeitversetzt angesteuert werden können, dass sich für einen Betrachter, der den Warnbalken aus einer gewissen Entfernung sieht, der Eindruck ergibt, der Warnbalken enthalte eine sich drehende, auch Rundumkennleuchte genannte Signalleuchte (sog. "Drehlichtbetrieb").

Die DE 199 44 533 A1 beschreibt, dass eine solchermaßen realisierte Signalleuchte auch im sogenannten Blitzlichtbetrieb betrieben werden kann, in welchem alle oder zumindest bestimmte LEDs gleichzeitig so angesteuert werden, dass periodisch Lichtblitze erzeugt werden.

Eine besonders vorteilhafte Ausgestaltung wird in der DE 20 2006 019 347 U1 beschrieben, womit eine automatische Auswahl einer der Betriebsarten Drehlicht- und Blitzlichtbetrieb möglich ist. Es hat sich nämlich gezeigt, dass - je nach den Umgebungsbedingungen, wie insbesondere Helligkeit und Sichtweite - manchmal der Drehlichtbetrieb und manchmal der Blitzlichtbetrieb vorteilhaft ist. So ist das im Blitzlichtbetrieb abgestrahlte Licht deutlich heller und kann damit insbesondere am Tage bei guten Sichtverhältnissen schon aus großer Entfernung gut erkannt werden. Dagegen ist eine Signalleuchte im Drehlichtbetrieb insbesondere bei Nacht und/oder bei Nebel für einen menschlichen Betrachter leichter ortbar, während bei diesen Sichtverhältnissen zwar ein Blitzlicht leicht als solches erkannt wird, dessen Position aber nur schwer vom menschlichen Betrachter geortet werden kann.

Die LED-Technik hat jedoch, insbesondere wenn blaues Licht emittierende LEDs verwendet werden, einen gravierenden Nachteil: es wird praktisch kein Licht im Infraroten abgestrahlt, so dass mit solchen LEDs ausgestattete Warnbalken im Betrieb nicht mittels üblicher Infrarot-Nachtsichtgeräte erkannt werden können. Hubschrauberbesatzungen verwenden aber im Nachteinsatz solche Infrarot-Nachtsichtgeräte oder Restlichtverstärker mit besonderer Empfindlichkeit im Infraroten und können dann sog. "aktive" Einsatzfahrzeuge (also Fahrzeuge mit eingeschalteter Signalleuchte) nicht mehr erkennen und dadurch auch nicht mehr durch "Fliegen auf Sicht" zum Einsatzort geleitet werden.

Aus der WO 2005 121 637 A1 ist eine Blitzkennleuchte bekannt, bei der zu Erzeugung eines sich drehenden Infrarot-Signals die LEDs der Signalleuchte an einer Halterung befestigt sind, die mit einer sich drehenden Plattform verbunden ist, wobei auch ein Spiegel vorhanden ist, der fest mit der sich drehenden Plattform verbunden ist. Dadurch dreht sich der komplette Lichtaufbau, wodurch der technische Nachteil bedingt wird, dass ein rotierendes elektrisches Bauteil mit Strom versorgt werden muss. Dazu sind z.B. verschleißanfällige Schleifringe oder dergleichen notwendig, die zudem bei ungünstigen Witterungsbedingungen schnell oxidieren können, so dass eine zuverlässige Stromversorgung nicht gewährleistet ist.

### OFFENBARUNG DER ERFINDUNG

Der Erfindung liegt die Aufgabe zugrunde, einen Warnbalken für Einsatzfahrzeuge und ein Einsatzfahrzeug mit einem solchen Warnbalken bereitzustellen, mit welchen die Vorteile der LED-Technik genutzt werden können, die aber auch eine Ortung mit Hilfe von Infrarot-Nachtsichtgeräten erlauben, und zwar unabhängig davon, ob der Warnbalken ein Warnsignal aus einem für das menschliche Auge sichtbaren Licht abstrahlt.

Die Aufgabe wird von einem Warnbalken mit den Merkmalen des Anspruchs 1 bzw. einem Einsatzfahrzeug mit den Merkmalen des Anspruchs 10 gelöst. Vorteilhafte Ausgestaltungen und Weiterbildungen der Erfindung sind Gegenstand der Unteransprüche.

Die Erfindung beruht auf der nicht-trivialen Idee, Mittel zur Erzeugung eines drehenden Signals aus infrarotem Licht vorzusehen, die getrennt von einer LED-Signaleinrichtung zur Erzeugung eines drehenden oder blitzenden Warnsignals aus sichtbaren Licht einschaltbar sind. Dies erlaubt es erstmals, bei einer sogenannten "taktischen Annäherung" in der Nacht, bei der sich ein Einsatzfahrzeug "stumm", also ohne hörbare oder für das menschliche Auge sichtbare Warnsignale einem Einsatzort nähert, die Mittel zur Erzeugung eines drehenden Signals aus infrarotem Licht einzuschalten und damit das Einsatzfahrzeug vorteilhaft z.B. für eine mit entsprechenden Nachtsichtgeräten ausgestattete Hubschrauberbesatzung leicht ortbar zu machen, was für die Einsatzkräfte wichtige Vorteile hat.

Bei aus dem Stand der Technik bekannten Warnbalken, deren Licht mittels Glüh- oder Entladungslampen erzeugt wird, wird bei eingeschalteten Lampen Licht sowohl im sichtbaren als auch im infraroten Bereich ausgestrahlt. Eine Entkopplung dieser Ausstrahlungen ist nicht möglich, d.h. die Lampen können nicht lediglich nur Infrarotlicht ohne sichtbares Licht ausstrahlen.

Es hat sich gezeigt, dass ein einfaches zusätzliches Einbauen von im Infraroten emittierenden und z.B. nach oben abstrahlenden LEDs in einen Warnbalken nicht den gewünschten Effekt der leichten Ortbarkeit eines aktiven Fahrzeugs mittels Nachtsichtgeräten erzielt, da es, gerade i.d.R. zu viele andere, ähnlich aussehende Infrarotlichtquellen gibt. Auch ein einfaches pulsierendes Infrarotlicht löst das Problem nicht, da z.B. das durch Bäume teilweise verdeckte Scheinwerferlicht fahrender Fahrzeuge durch ein Infrarot-Nachtsichtgerät betrachtet praktisch denselben optischen Eindruck erzeugt.

Weitere Einzelheiten und Vorteile der Erfindung ergeben sich aus der nachfolgenden rein beispielhaften und nicht-beschränkenden Beschreibung eines Ausführungsbeispiels in Verbindung mit der Zeichnung.

### KURZE BESCHREIBUNG DER ZEICHNUNGEN

- Fig. 1: zeigt schematisiert einen Ausschnitt eines Teils eines erfindungsgemäßen Warnbalkens, gesehen schräg von der Seite.
- Fig. 2: zeigt schematisiert einen Ausschnitt eines Teils eines erfindungsgemäßen Warnbalkens in Draufsicht.
- Fig. 3: zeigt schematisiert einen Ausschnitt eines Teils eines erfindungsgemäßen Warnbalkens in Seitenansicht.
- Fig. 4: zeigt ein Abstrahlschema des von einer LED erzeugten und erfindungsgemäß mit einem Drehspiegel gelenkten Infrarotlichts.

### BESCHREIBUNG EINER BEVORZUGTEN AUSFÜHRUNGSFORM

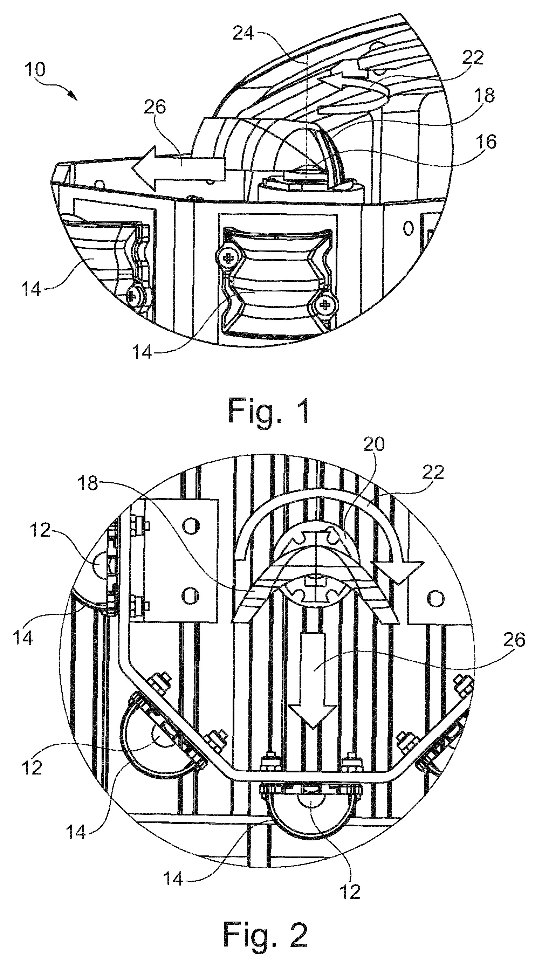

In den Fig. 1 bis 3 ist schematisiert ein Ausschnitt eines Teils eines erfindungsgemäßen Warnbalkens für Einsatzfahrzeuge in verschiedenen Ansichten gezeigt.

Der Warnbalken umfasst eine in ihrer Gesamtheit mit 10 bezeichnete LED-Signaleinrichtung, die bei dem gezeigten Ausführungsbeispiel eine Anzahl von sichtbares Licht emittierenden LEDs 12 (Fig. 2) und zugeordneten Optiken 14 aufweist, wobei die LEDs 12 zeitversetzt zur Erzeugung eines sich scheinbar drehenden Warnsignals angeschaltet werden können, jedoch auch ein Blitzlichtbetrieb möglich sein kann.

Der Warnbalken umfasst ferner Mittel zur Erzeugung eines drehenden Signals aus infrarotem Licht, wobei diese Mittel bei diesem Ausführungsbeispiel eine im Infraroten emittierende LED 16 (nachfolgend IR-LED genannt) und einen Drehspiegel 18 umfassen. Dabei ist die LED 16 feststehend angeordnet, bewegt sich also relativ zum Warnbalken nicht. Im Betrieb dreht sich der Drehspiegel 18 um die LED 16. Diese Ausgestaltung hat den großen Vorteil; dass kein Schleifring zur Stromversorgung einer drehenden LED benötigt wird. Eine feststehende LED kann leicht mit Strom versorgt und auch leicht gekühlt werden. Bei sich im Betrieb drehenden LEDs sind dagegen Kühlung und Stromversorgung problematisch. Zudem hat die Ausgestaltung mit Drehspiegel den großen Vorteil, dass nur eine einzige IR-LED benötigt wird.

Der Drehspiegel 18 wird im Betrieb mittels eines Elektromotors 20 drehangetrieben und dreht sich wie durch den Bewegungspfeil 22 angedeutet um die Achse 24. Bei eingeschalteter IR-LED 16 bündelt der konvexe Drehspiegel 18 dann das von der IR-LED emittierte Infrarotlicht und strahlt es je nach aktueller Drehstellung des Drehspiegels 18 hauptsächlich in der durch den Pfeil 26 angedeuteten Richtung ab.

Da die Achse 24 im bestimmungsgemäßen Montagezustand des Warnbalkens auf einem Fahrzeugdach im Wesentlichen lotrecht steht, ändert sich Abstrahlrichtung 26 in einer im wesentlichen waagerechten Ebene, so dass also wie bei einer klassischen Drehspiegelkennleuchte immer das Umfeld um das Fahrzeug angestrahlt wird.

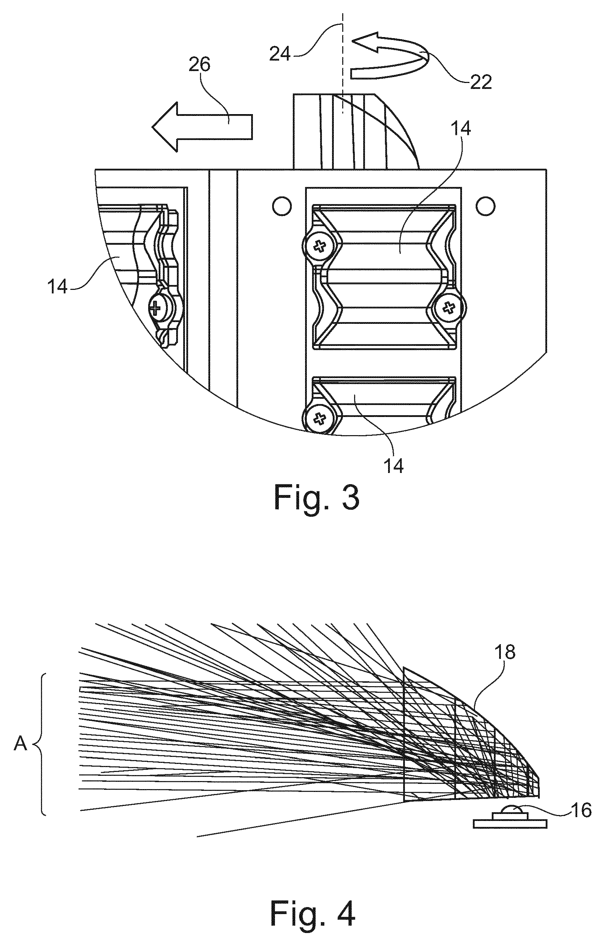

Die Fig. 4 zeigt schematisch, wie durch den erfindungsgemäßen konvexen Drehspiegel 18 die Mehrzahl A der von der IR-LED 16 ausgehenden Infrarot-Strahlen gebündelt und im bestimmungsgemäßen Montagezustand des Warnbalkens auf einem Fahrzeugdach im Wesentlichen waagerecht abgestrahlt wird.

Sowohl LED-Signaleinrichtung als auch die Mittel zur Erzeugung des drehenden Signals aus infrarotem Licht sind bei der bevorzugten Ausführungsform des Warnbalken doppelt, nämlich jeweils im Bereich der beiden einander gegenüberliegenden Enden des Warnbalkens, also im bestimmungsgemäßen Montagezustand auf dem Dach eines Einsatzfahrzeugs jeweils nahe der linken und rechten Fahrzeugseite vorgesehen. Es sind jedoch auch Ausführungsformen denkbar, bei denen z.B. die Mittel zur Erzeugung des drehenden Signals aus infrarotem Licht nur einfach vorgesehen sind.

Bei der derzeit bevorzugten Ausführungsform umfasst der Warnbalken hier nicht gezeigte Steuerungsmittel zur Einstellung der Drehfrequenz, mit der sich der Drehspiegel 18 um die Achse 24 und damit das abgestrahlte Signal aus infrarotem Licht dreht. Diese Mittel können sowohl so ausgebildet sein, dass die Drehfrequenz nur bei der Wartung/Montage des Warnbalkens eingestellt werden kann, sie können aber auch so ausgebildet sein, dass die Fahrzeugbesatzung z.B. in Abstimmung mit einer Hubschrauberbesatzung die Drehfrequenz einstellen kann. Beispielsweise kann es auf Hafen- oder Fabrikgeländen mit einer bestimmten Frequenz drehende Warnleuchten geben, die mit Glühlampen betrieben werden und daher Infrarotlicht abstrahlen. Um dann eine leichte Ortung des Einsatzfahrzeuges zu erlauben, kann sich die Besatzung eines Einsatzfahrzeuges mit einer Hubschrauberbesatzung auf eine bestimmte andere Drehfrequenz einigen, mit der der Drehspiegel 18 drehen soll. Typische Drehfrequenzen für den Drehspiegel liegen zwischen etwa 0,5 und 20 Hz. Auch kann eine z.B. bundeslandeinheitliche Drehfrequenz festgelegt sein, wonach sich dann z.B. die Drehspiegel von Polizeifahrzeugen des Landes Nordrhein-Westfalen mit einer bestimmten Drehfrequenz drehen, die sich z.B. von der Drehfrequenz von Drehspiegeln von Feuerwehrfahrzeugen unterscheidet. Dies kann gerade bei Großeinsätzen hilfreich sein.

Alternativ oder vorzugsweise zusätzlich zur Einstellbarkeit der Drehfrequenz können zur weiteren besseren Ortbarkeit und Unterscheidbarkeit eines Einsatzfahrzeuges von anderen Fahrzeugen mit drehenden Signalleuchten, wie z.B. Baustellenfahrzeugen oder Schwertransporten, mittels Infrarot-Nachtsichtgeräten auch aus größerer Entfernung Mittel zur Modulation der Stärke des drehenden Signals aus infrarotem Licht vorgesehen sein. Beispielsweise kann, wie von Leuchtfeuern (Seezeichen) bekannt, vorgesehen sein, dass das Infrarotsignal nicht kontinuierlich, sondern gepulst wie ein Gleichtakt-, Blink- oder Blitzfeuer abgestrahlt wird, also z.B. im Wechsel 75 Millisekunden an-, 75 Millisekunden ausgeschaltet wird. Auch diese Mittel können sowohl so ausgebildet sein, dass die Modulation nur bei der Wartung/Montage des Warnbalkens eingestellt werden kann, sie können aber auch so ausgebildet sein, dass die Fahrzeugbesatzung z.B. in Abstimmung mit einer Hubschrauberbesatzung die Modulation einstellen kann. Dies erlaubt es dann auch, in einfacher Weise verschiedenen Einsatzfahrzeugen unterschiedliche Kennungen zuzuweisen, also z.B. Einsatzfahrzeug Nr. 1 Gleichtaktfeuer, Einsatzfahrzeug Nr. 2 Blitzfeuer mit Gruppen zu je zwei Blitzen etc.

Es kann vorgesehen sein, dass die Mittel zur Erzeugung eines drehenden Signals aus infrarotem Licht bei Einschaltung der wenigstens einen LED-Signaleinrichtung zur Erzeugung eines drehenden oder blitzenden Warnsignals aus sichtbarem Licht automatisch eingeschaltet werden, vorzugsweise in Abhängigkeit vom Tageslicht. Ist es nämlich noch ausreichend hell, werden keine Nachtsichtgeräte benutzt und die Erzeugung eines Infrarotsignals ist nicht notwendig.

Bei der derzeit bevorzugten Ausführungsform ist vorgesehen, dass die Mittel zur Erzeugung eines drehenden Signals aus infrarotem Licht unabhängig von einer ggf. vorhanden Einschaltautomatik jedenfalls auch manuell getrennt von der wenigstens einen LED-Signaleinrichtung zur Erzeugung eines drehenden oder blitzenden Warnsignals aus sichtbarem Licht ein- und ggf. auch ausschaltbar sind. Dies erlaubt es vorteilhaft, bei einer sog. "taktischen Annäherung" in der Nacht, bei der sich ein Einsatzfahrzeug "stumm", also ohne hörbare oder für das menschliche Auge sichtbare Warnsignale einem Einsatzort nähert, die Mittel zur Erzeugung eines drehenden Signals aus infrarotem Licht einzuschalten und damit das Einsatzfahrzeug z.B. für eine mit entsprechenden Nachtsichtgeräten ausgestattete Hubschrauberbesatzung leicht ortbar zu machen.

Vorteilhaft können Mittel vorgesehen sein, die der Besatzung des Einsatzfahrzeugs das Einschalten und/oder das Eingeschaltetsein der Mittel zur Erzeugung eines drehenden Signals aus infrarotem Licht anzeigen, z.B. können ein Quittungston beim Einschalten erzeugt und eine LED im Inneren des Fahrzeug angeschaltet werden.

Im Rahmen des Erfindungsgedankens sind zahlreiche Abwandlungen und Weiterbildungen möglich, die sich z.B. auf die Mittel zur Erzeugung eines drehenden Signals aus infrarotem Licht beziehen. So kann anstelle des gezeigten Drehspiegels eine Anzahl von im Infraroten emittierenden LEDs vorgesehen werden, die aufeinander abgestimmt zeitversetzt anschaltbar sind, um den optischen Eindruck einer sich Drehspiegelkennleuchte zu erzeugen. Die Verwendung eines Drehspiegels erlaubt es jedoch, mit einer einzigen IR-LED, die z.B. eine Leistung von etwa 3 Watt oder mehr besitzt, den charakteristischen Lichtkegel einer klassischen, mit Glühlampen betriebenen Drehspiegelkennleuchte nachzubilden, auf dessen Erkennung z.B. Hubschrauberbesatzungen trainiert sind.

## Patentansprüche

1. Warnbalken für Einsatzfahrzeuge, umfassend
- wenigstens eine LED-Signaleinrichtung 10, 12, 14) zur Erzeugung eines drehenden oder blitzenden Warnsignals aus sichtbarem Licht,
**dadurch gekennzeichnet,**
- **dass** Mittel (16, 18) zur Erzeugung eines drehenden Signals aus infrarotem Licht, ohne sichtbares Licht, vorgesehen sind und
- **dass** die Mittel (16, 18) zur Erzeugung eines drehenden Signals aus infrarotem Licht getrennt von der wenigstens einen LED-Signaleinrichtung 10, 12, 14) zur Erzeugung eines drehenden oder blitzenden Warnsignals aus sichtbarem Licht einschaltbar sind,
- so dass der Warnbalken in einem Modus betrieben werden kann, in welchem die Mittel (16, 18) zur Erzeugung eines drehenden Signals aus infrarotem Licht eingeschaltet sind und keine für das menschliche Auge sichtbare Warnsignale produziert werden.

2. Warnbalken nach Anspruch 1, **dadurch gekennzeichnet, dass** die Mittel zur Erzeugung eines drehenden Signals aus infrarotem Licht wenigstens eine im Infraroten emittierende LED (16) umfassen.

3. Warnbalken nach Anspruch 2, **dadurch gekennzeichnet dass** die im Infraroten emittierende LED (16) relativ zum Warnbalken feststehend angeordnet ist.

4. Warnbalken nach einem der Ansprüche 1 bis 3, **dadurch gekennzeichnet, dass** die Mittel zur Erzeugung eines drehenden Signals aus infrarotem Licht einen Drehspiegel (18) umfassen.

5. Warnbalken nach Anspruch 1 oder 2, bis **dadurch gekennzeichnet, dass** die Mittel zur Erzeugung eines drehenden Signals aus infrarotem Licht eine Anzahl von im Infraroten emittierenden LEDs (16) umfassen, die aufeinander abgestimmt nacheinander anschaltbar sind.

6. Warnbalken nach einem der Ansprüche 1 bis 5, **dadurch gekennzeichnet, dass** Mittel zur Einstellung der Drehfrequenz, mit der sich das drehende Signal aus infrarotem Licht dreht, vorgesehen sind.

7. Warnbalken nach einem der Ansprüche 1 bis 6, **dadurch gekennzeichnet, dass** Mittel zur Modulation der Stärke des drehenden Signals aus infrarotem Licht vorgesehen sind.

8. Warnbalken nach einem der Ansprüche 1 bis 7, **dadurch gekennzeichnet, dass** im Bereich der beiden einander gegenüberliegenden Enden des Warnbalkens jeweils Mittel zur Erzeugung eines drehenden Signals aus infrarotem Licht vorgesehen sind.

9. Warnbalken nach einem der Ansprüche 1 bis 8, **dadurch gekennzeichnet, dass** Mittel zur automatischen, vorzugsweise tageslichtabhängigen Anschaltung der Mittel zur Erzeugung eines drehenden Signals aus infrarotem Licht bei Einschaltung der wenigstens einen LED-Signaleinrichtung (10) zur Erzeugung eines drehenden oder blitzenden Warnsignals aus sichtbarem Licht vorgesehen sind.

10. Einsatzfahrzeug mit einem Warnbalken nach einem der Ansprüche 1 bis 9.

## Claims

1. A light bar for emergency vehicles, comprising
- at least one LED signal device (10, 12, 14) for generating a rotating or flashing warning signal from visible light,
**characterized in**
- **that** means (16, 18) are provided for generating a rotating signal from infrared light, without visible light, and
- **that** the means (16, 18) for generating a rotating signal from infrared light can be switched on separately from the at least one LED signal device (10, 12, 14) for generating a rotating or flashing warning signal from visible light,
- so that the light bar can be operated in a mode in which the means (16, 18) for generating a rotating signal from infrared light are switched on and no warning signals visible to the human eye are produced.

2. The light bar according to claim 1, **characterized in that**, the means for generating a rotating signal from infrared light comprise at least one LED (16) emitting in the infrared.

3. The light bar according to claim 2, **characterized in that**, the LED (16) emitting in the infrared is arranged in a fixed position relative to the light bar.

4. The light bar according to any one of claims 1 to 3, **characterized in that**, the means for generating a rotating signal from infrared light comprise a rotating mirror (18).

5. The light bar according to claim 1 or 2, **characterized in that**, the means for generating a rotating signal from infrared light comprise a number of LEDs (16) emitting in the infrared, which are matched to one another and can be switched on one after another.

6. The light bar according to any one of claims 1 to 5, **characterized in that**, means are provided for adjusting the rotation frequency at which the rotating signal from infrared light rotates.

7. The light bar according to any one of claims 1 to 6, **characterized in that**, means are provided for modulating the amplitude of the rotating signal from infrared light.

8. The light bar according to any one of claims 1 to 7, **characterized in that**, in the area of each of the two opposite ends of the light bar, means are arranged for generating a rotating signal from infrared light.

9. The light bar according to any one of claims 1 to 8, **characterized in that**, means are provided for automatically switching on, preferably in a daylight dependent manner, the means for generating a rotating signal from infrared light when switching on the at least one LED signal device (10) for generating a rotating or flashing warning signal from visible light.

10. An emergency vehicle having a light bar according to any one of claims 1 to 9.

## Revendications

1. Barre d'avertissement pour véhicules d'intervention, comprenant
- au moins un dispositif de signalisation à DEL (10, 12, 14) destiné à générer un signal avertisseur tournant ou à éclats en lumière visible,
**caractérisée en ce**
- **que** des moyens (16, 18) de génération d'un signal tournant en lumière infrarouge, sans lumière visible, sont prévus et
- **que** les moyens (16, 18) de génération d'un signal tournant en lumière infrarouge peuvent être allumés séparément dudit au moins un dispositif de signalisation à DEL (10, 12, 14) de génération d'un signal avertisseur tournant ou à éclats en lumière visible,
- de sorte que la barre d'avertissement peut être opérée dans un mode dans lequel les moyens (16, 18) de génération d'un signal tournant en lumière infrarouge sont allumés et qu'aucun signal avertisseur visible pour l'oeil humain n'est produit.

2. Barre d'avertissement selon la revendication 1, **caractérisée en ce que** les moyens de génération d'un signal tournant en lumière infrarouge comprennent au moins une DEL (16) émettant dans l'infrarouge.

3. Barre d'avertissement selon la revendication 2, **caractérisée en ce que** la DEL (16) émettant dans l'infrarouge est disposée de manière fixe par rapport à la barre d'avertissement.

4. Barre d'avertissement selon l'une quelconque des revendications 1 à 3, **caractérisée en ce que** les moyens de génération d'un signal tournant en lumière infrarouge comprennent un miroir tournant (18).

5. Barre d'avertissement selon la revendication 1 ou 2, **caractérisée en ce que** les moyens de génération d'un signal tournant en lumière infrarouge comprennent un nombre de DEL (16) émettant dans l'infrarouge qui peuvent être allumées successivement tout en étant accordées les unes sur les autres.

6. Barre d'avertissement selon l'une quelconque des revendications 1 à 5, **caractérisée en ce que** des moyens de réglage de la fréquence de rotation à laquelle le signal tournant en lumière infrarouge tourne sont prévus.

7. Barre d'avertissement selon l'une quelconque des revendications 1 à 6, **caractérisée en ce que** des moyens de modulation de l'intensité du signal tournant en lumière infrarouge sont prévus.

8. Barre d'avertissement selon l'une quelconque des revendications 1 à 7, **caractérisée en ce que** des moyens de génération d'un signal tournant en lumière infrarouge sont prévus respectivement au niveau des deux extrémités en regard l'une de l'autre de la barre d'avertissement.

9. Barre d'avertissement selon l'une quelconque des revendications 1 à 8, **caractérisée en ce que** l'on prévoit des moyens destinés à allumer de manière automatique, de préférence en fonction de la lumière du jour, les moyens de génération d'un signal tournant en lumière infrarouge, lorsque ledit au moins un dispositif de signalisation à DEL (10) de génération d'un signal avertisseur tournant ou à éclats en lumière visible est allumé.

10. Véhicule d'intervention comprenant une barre d'avertissement selon l'une quelconque des revendications 1 à 9.
